(19)

Europäisches
Patentamt
European
Patent Office
Office européen
des brevets

(11) **EP 2 309 310 A1**

(12) **EUROPEAN PATENT APPLICATION**

(43) Date of publication:
**13.04.2011 Bulletin 2011/15**

(21) Application number: **09171926.0**

(22) Date of filing: **01.10.2009**

(51) Int Cl.:
*G02B 27/22* (2006.01)      *G02C 7/10* (2006.01)
*H04N 13/00* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Koninklijke Philips Electronics N.V.
5621 BA Eindhoven (NL)**

(72) Inventor: **The designation of the inventor has not
yet been filed**

(74) Representative: **Damen, Daniel Martijn
Philips Intellectual Property & Standards
P.O. Box 220
5600 AE Eindhoven (NL)**

(54) **3D spectacles**

(57)     3D spectacles are provided for viewing three dimensional image data via a left image and a right image at a display viewing distance, the spectacles being arranged to admit only the left image to the left eye and only the right image to the right eye. In a nominal eye configuration the eyes are accommodated at the display viewing distance by a nominal eye-convergence and a nominal eye lens focal length. The spectacles have optical elements (21,22) for changing optical radiation from the 3D display for modifying the nominal eye configuration to a compensated eye configuration in accordance with depth to be perceived in the 3D image data. A 3D image processing device has an adjustment unit (11) for adjusting the optical elements of the spectacles. Advantageously the compensated eye configuration is similar to an intended or natural eye configuration, which is less fatiguing and more comfortable for the viewer.

FIG. 1

EP 2 309 310 A1

**Description**

FIELD OF THE INVENTION

The invention relates to spectacles for viewing three dimensional [3D] image data rendered via a 3D image processing device on a 3D display, the 3D display providing at least a left image L to be perceived by a left eye and a right image R to be perceived by a right eye of a viewer at a display viewing distance, the spectacles being arranged to admit only the left image L to the left eye and only the right image R to the right eye.

The invention further relates to device and method for processing 3D image data for cooperating with the 3D spectacles.

The invention relates to the field of perceiving 3D image data as displayed on a 3D display. The 3D image data may be provided via a medium, processed by a 3D image device for display on the 3D display, and transferred via a high-speed digital interface, e.g. HDMI, between the 3D image device and a 3D display device.

BACKGROUND OF THE INVENTION

3D display systems which can provide two different views have been around for a long time. Most of these are based on using special glasses, called 3D spectacles in this document, to separate the left- and right eye view.

The article "Reconstruction of Correct 3-D perception on Screens viewed at different distances; by R. Kutka; IEEE transactions on Communications, Vol.42, No.1, January 1994" describes perception of depth of a viewer watching a 3D display providing a left image L to be perceived by a left eye and a right image R to be perceived by a right eye of the viewer. The effect of different screen sizes on depth perception is discussed. It is proposed to apply a size dependent shift between the stereo images. The shift is calculated in dependence of the size ratio of the different screens and proven to be sufficient to reconstruct the correct 3-D geometry.

SUMMARY OF THE INVENTION

Although the article by Kutka describes a formula for compensating disparity for different screen sizes of 3D displays, and discusses different viewing distances, the article is silent on further effects of perceiving depth via left and right images at various distances. A problem of known 3D display systems is that perceiving depth can be uncomfortable or fatiguing.

It is an object of the invention to provide a system for perceiving depth from 3D image data displayed on a 3D display via left and right images that avoids discomfort and fatigue.

For this purpose, according to a first aspect of the invention, for the spectacles as described in the opening paragraph, a nominal eye configuration of the viewer has the eyes accommodated at the display viewing distance by a nominal eye-convergence and a nominal eye lens focal length to perceive said images, and the spectacles comprise optical elements for changing optical radiation from the 3D display for modifying the nominal eye configuration to a compensated eye configuration in accordance with depth to be perceived in the 3D image data.

The measures have the effect that the optical radiation of the 3D display, i.e. light rays emitting from the 3D display to be captured by the eyes of the viewer, is modified to be similar to optical radiation of objects at a virtual position that corresponds to a realistic depth position as intended by the author of the 3D image data. Effectively the spectacles have optical elements like a lens, diffractive optical element or prism, for changing optical radiation from the 3D display for modifying the nominal eye configuration to a compensated eye configuration in accordance with depth to be perceived in the 3D image data. Advantageously the compensated eye configuration is similar to an intended eye configuration when perceiving objects contained in the 3D image data, which is less fatiguing and more comfortable for the human viewer. The intended eye configuration is determined by the author of the 3D image data, and may correspond to the natural eye configuration when the human would be actually present and observing the objects at the depths perceived. The intended configuration may also be a predefined viewing configuration, e.g. a movie theatre, or a preferred configuration that allows perceiving an optimized depth range for the respective 3D image material (e.g. close-up or macro image material).

In particular, the inventors have seen that the compensated eye configuration is required when the 3D image data is displayed at a screen size differing from the screen size intended to be used for the nominal eye configuration, while applying a disparity shift as proposed in the Kutka article. For example, when the 3D image data is intended to be used in a movie theatre on a big screen, and the actual viewing is at home on a 3D TV set, the disparity can be increased so that the virtual objects are again shown in the original depth range, i.e. shifted backwards to be in the range up to infinity. However, in the movie theatre the eyes will be focused at a large viewing distance, e.g. 15 meter. At home, the screen may be at a viewing distance of 3 meter. The 3D spectacles as proposed may have a positive lens so that the eyes are again focused at 15 meter instead of 3 meter.

The invention is also based on the following recognition. The eyes have muscles for rotating the eyes as well as for stretching the eye lens. Oculomotor cues are depth cues derived from tension in the muscles of a viewers eyes. The stretching and relaxing of the eye lens is called accommodation and is done when focusing on an image. The amount of stretching or relaxing of the lens muscles provides a cue for how far or close an object is. Furthermore, rotation of the eyes is done such that both eyes focus on the same object, which is called convergence. The convergence also provides a cue for how far or close an object is.

The inventors have seen that, whereas disparity of the left and right images provides a primary depth cue in addition to 2D depth cues like relative size, that oculomotor cues are different from real life when viewing 3D image data on traditional 3D displays via left and right images, because the display screen actually is at a nominal viewing distance which differs from the distance to the virtual object that is perceived. Hence traditionally the nominal eye configuration of the viewer will have the eyes accommodated at the display viewing distance by a nominal eye-convergence and a nominal eye lens focal length to perceive said images. However, objects in the 3D image data are displayed at depth positions based on disparity, and may be either in front of or behind the display screen. The inventors have proposed to intentionally modify the radiation to bring oculomotor cues more in accordance with the depths to be perceived in the 3D image data. Advantageously, due to the 3D spectacles, the muscles in the eyes of the viewer will now experience a stretching that corresponds to the perceived depth instead of the stretching that corresponds to the display viewing distance, which proves less fatiguing and more comfortable to the human brain.

It is to be noted that the modification is not for correction of deviations of the eye like normal everyday glasses, but modifies the radiation to be intentionally different from the nominal radiation from the display screen that would enter a normal human eye (i.e. an eye not needing any glasses for diopter correction). For viewers wearing glasses or eye lenses, the 3D spectacles should be worn on top of the normal eyewear. The 3D spectacles then add a further optical element, e.g. having additional diopter strength, not to correct the viewer's eye deviation, but to intently deviate from the nominal situation. Alternatively personalized 3D spectacles for such viewer may be made that not only provide said additional modification, but also the correction normally required for correcting the deviations of the viewer's eyes. The viewer may then take off his normal glasses and only wear his personalized 3D spectacles.

In an embodiment of the spectacles the optical elements comprise a lens for modifying the nominal eye lens focal length to a selected eye lens focal length at a virtual viewing distance different from the display viewing distance. This has the advantage that the amount of stretching or relaxing of the lens muscles of the viewer's eye is adjusted to be in accordance with objects to be perceived around the virtual viewing distance.

In an embodiment of the spectacles the optical elements comprise at least one prism for modifying the nominal eye-convergence to a selected eye-convergence at a virtual viewing distance different from the eye-convergence at the display viewing distance. This has the advantage that the convergence of the viewers eyes is adjusted to be in accordance with depths to be perceived. It is noted that a single prism may be used as the relative rotational position of the eyes provides the oculomotor convergence clue to the human brain. A prism may also be advantageously used for a viewer having a smaller eye to eye distance than the maximum disparity shown at the 3D display, e.g. to avoid that a child has to squint for objects at infinity.

In an embodiment of the spectacles the compensated eye configuration corresponds to a reference eye configuration of a viewer of a reference 3D display intended during generating the 3D image data. This has the advantage that the eye configuration is controlled to be as intended in a reference viewing configuration, i.e. a predetermined viewing distance and setup, e.g. a movie theatre used as reference configuration when creating and authoring the 3D image data. The viewer will be at an actual viewing configuration, e.g. at home for a TV screen. Advantageously, when the viewer at the actual viewing configuration wears the spectacles that have been selected for the difference between the reference and the actual viewing configuration, the eye configuration (convergence and accommodation) is equal to the reference eye configuration. Hence, in the example, the viewer at home will experience the same oculomotor cues as the viewer in the movie theatre.

In an embodiment of the spectacles the compensated eye configuration corresponds to a comfort eye configuration of a viewer of a virtual 3D display at a virtual viewing distance, the comfort eye configuration allowing comfortably perceiving a comfort depth range comprising depth values occurring in the 3D image data. The comfort eye configuration corresponds to an eye configuration in which a selected depth range can be perceived via disparity cues without causing discomfort.

In an embodiment of the spectacles the optical elements are adjustable by at least one of

- a user control element provided on the spectacles;
- an adjustment control signal;
- a measurement signal indicative of a viewer eye parameter;
- a measurement signal indicative of the viewing distance to the 3D display.

The optical elements of the spectacles are made adjustable, i.e. the strength of the lens and/or prism may be varied. This has the advantage that the actual strength of the lens and/or prism can be adjusted as deemed suitable. The adjustment can be done, for example, by user control elements. Also, the adjustment may be controlled via an adjustment control signal. Also, the adjustment may be made in dependence of a measurement signal indicative of a viewer eye parameter. Furthermore, the adjustment may be made in dependence of a measurement signal indicative of the viewing distance to the 3D display.

In an embodiment of the 3D spectacles comprise at least one of:

- measurement means for measuring the viewing distance of the viewer to the 3D display;
- measurement means for measuring an eye distance of the viewer;
- transfer means for transferring a signal to the 3D processing device for adjusting the left image L and the right image R; or
- indicator means for indicating an optimum viewing distance, the optimum viewing distance being a reference distance corrected by a size ratio between the size of the 3D display and the size of a reference 3D display intended displaying the 3D image data for a viewer at the reference distance.

Actually measuring the viewing distance of the viewer to the 3D display can be correctly performed because the spectacles are, when in operation, very close to the eyes of the viewer. Also the eye distance of the viewer can be measured of the viewer who is actually wearing the spectacles. The spectacles may also have transfer means for communicating with a 3D image device. Furthermore, the spectacles may have an indicator for showing, to the viewer, the optimum viewing distance.

For this purpose, according to a further aspect of the invention, the 3D image processing device as described in the opening paragraph, for a nominal eye configuration of the viewer having the eyes accommodated at the display viewing distance by a nominal eye-convergence and a nominal eye lens focal length to perceive said images, comprises means for adjusting optical elements of the spectacles via an adjustment signal for changing optical radiation from the 3D display for modifying the nominal eye configuration to a compensated eye configuration in accordance with depth to be perceived in the 3D image data.

For this purpose, according to a further aspect of the invention, there is provided a method of processing of three dimensional [3D] image data for rendering on a 3D display for a viewer, the 3D display providing at least a left image L to be perceived by a left eye and a right image R to be perceived by a right eye of a viewer at a display viewing distance via spectacles, a nominal eye configuration of the viewer having the eyes accommodated at the display viewing distance by a nominal eye-convergence and a nominal eye lens focal length to perceive said images, the method comprising adjusting optical elements of the spectacles for changing optical radiation from the 3D display for modifying the nominal eye configuration to a compensated eye configuration in accordance with depth to be perceived in the 3D image data.

The measures have the effect that the radiation of the 3D display is modified via the 3D spectacles as adjusted under the control of the 3D image processing device or method. Advantageously the spectacles are adjusted based on information on the 3D viewing configuration and/or the 3D image data.

In an embodiment the device comprises, for generating the adjustment signal, at least one of

- means for determining a size of the 3D display;
- means for determining an actual viewing distance of the viewer to the 3D display;
- means for determining a viewer selection for at least one of

  - an eye distance of the viewer,
  - a preferred viewing distance of the viewer to the 3D display,
  - a preferred comfort depth range.

Determining a size of the 3D display and/or determining an actual viewing distance of the viewer to the 3D display allows the device to determine the actual viewing configuration, and adjust the spectacles accordingly. Moreover, the device may include means for determining a viewer selection for at least one of an eye distance of the viewer, a preferred viewing distance of the viewer to the 3D display, or a preferred comfort depth range. Hence the spectacles can be adjusted to the actual viewer.

Also, the device may have means for determining an actual depth range occurring in the 3D image data, e.g. as provided by depth parameters or a depth map. The actual depth range can advantageously be used for adjusting the 3D spectacles.

In an embodiment the device has means for determining a preferred viewing distance for the 3D image data. For example, the preferred viewing distance may be indicated by a parameter in the 3D image data, or may established based on screen size and a reference viewing distance and screen size. Finally, the device may have transfer means for receiving a signal from the spectacles for adjusting the left image L and the right image R. This has the advantage that measurement and/or setting data from the spectacles is received and may be used to adjust the left and right images and/or the adjustment signal.

Further preferred embodiments of the device and method according to the invention are given in the appended claims, disclosure of which is incorporated herein by reference.

BRIEF DESCRIPTION OF THE DRAWINGS

These and other aspects of the invention will be apparent from and elucidated further with reference to the embodiments described by way of example in the following description and with reference to the accompanying drawings, in which

    Figure 1 shows 3D spectacles,
    Figure 2 shows viewing configurations,
    Figure 3 shows a prism for compensating the eye configuration,
    Figure 4 shows a plot of comfort depth range,
    Figure 5 shows adjustable 3D spectacles, and
    Figure 6 shows a system for processing 3D image data.

The figures are purely diagrammatic and not drawn to scale. In the Figures, elements which correspond to elements already described have the same reference numerals.

DETAILED DESCRIPTION OF EMBODIMENTS

Binocular disparity is a depth cue which is derived from the fact that both our eyes see a slightly different image. Re-creating binocular disparity in a display requires that the display can segment the view for the left - and right eye such that each sees a slightly different image on the display. Displays that can re-create binocular disparity are special displays which we will refer to as 3D or stereoscopic displays. The 3D displays are able to display images along a depth dimension actually perceived by the human eyes, called a 3D display having display depth range in this document. Hence 3D displays provide a different view to the left and right eye.

3D displays which can provide two different views have been around for a long time. Most of these are based on using glasses to separate the left and right eye view, e.g. via polarized light. Such glasses are called 3D spectacles in this document.

3D spectacles may be based on using shutter-glasses. The spectacles may be used in combination with high-resolution beamers or screens that can display frames at a high refresh rate (e.g. 120 Hz). The high refresh rate is required because with the shutter glasses method the left and right eye view are alternately displayed. For the viewer wearing the glasses perceives stereo video at 60 Hz. The shutter-glasses method allows for a high quality video and great level of depth.

Stereoscopic displays and shutter glasses do suffer from accommodation-convergence mismatch. This does limit the amount of depth and the time that can be comfortable viewed using these devices. It is noted that the current invention reduces said mismatch and may be used for any type of 3D display that has a depth range by displaying left and right images at a specific distance from the viewer.

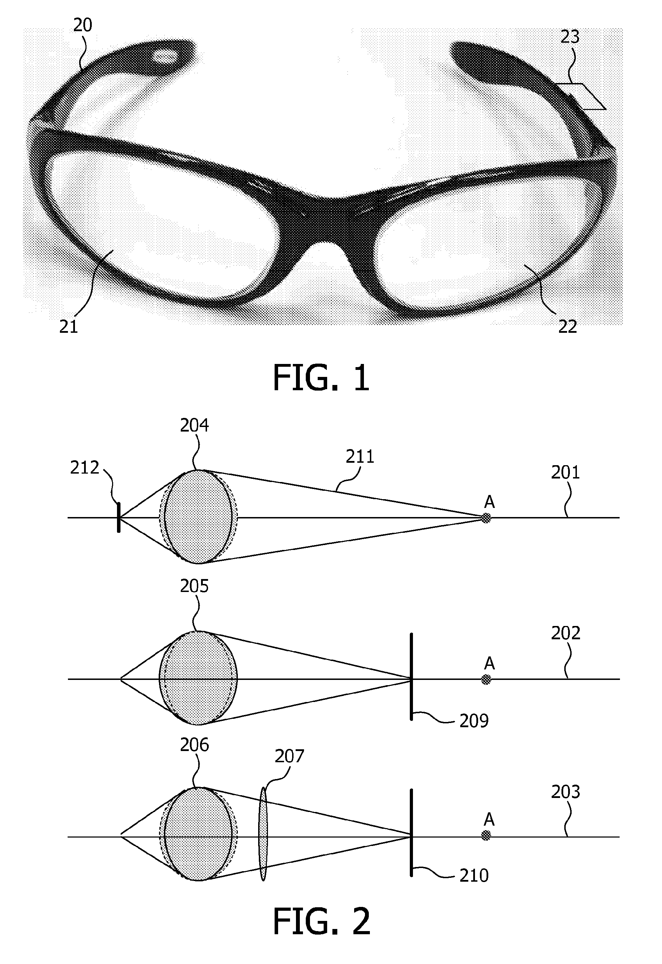

Figure 1 shows 3D spectacles. The spectacles 20 are to be worn by a viewer of a 3D display for viewing three dimensional image data rendered via a 3D image processing device on the 3D display. The 3D display provides at least a left image L to be perceived by a left eye and a right image R to be perceived by a right eye of a viewer at a display viewing distance. The spectacles have glasses 21,22 for admitting only the left image L to the left eye and only the right image R to the right eye, for example by having perpendicular polarizing directions while the 3D display provides suitably polarized L and R images. The glasses 21,22 may also be shutter glasses that are closed intermittently for admitting L and R images that are shown in a sequence. The spectacles may have a receiver 23 for synchronizing the shutter glasses with the 3D display. The 3D display device provides a synchronizing signal for the receiver that indicates the display of the L and R images respectively. It is noted that shutter glasses as such are known. Moreover, the sequence of images may comprise multiple L and/or R images for different viewers wearing different, respectively synchronized, 3D spectacles.

The 3D images are normally intended to be shown in a nominal or reference viewing configuration, e.g. a movie theatre. In the reference viewing configuration a screen of a predetermined size is assumed to be viewed at a nominal viewing distance. The creator of the 3D image data has provided the L and R image data for the nominal viewing conditions. When viewed in the intended configuration, the nominal eye configuration of the viewer has the eyes accommodated at the display viewing distance by a nominal eye-convergence and a nominal eye lens focal length to perceive said images.

The spectacles have optical elements, e.g. said glasses 21,22 being further shaped to constitute a lens and/or prism, or additional optical units like a lens or a prism, for changing optical radiation from the 3D display for modifying the nominal eye configuration to a compensated eye configuration in accordance with depth to be perceived in the 3D image data. The strength of the optical elements is selected to force the eyes of the viewer to a compensated eye-convergence and eye lens focal length, as explained in detail later.

In an embodiment of the spectacles the optical elements comprise a lens for modifying the nominal eye lens focal length to a selected eye lens focal length at a virtual viewing distance different from the display viewing distance. The amount of stretching or relaxing of the lens muscles of the viewer's eye is adjusted to be in accordance with depths to be perceived. For example the virtual viewing distance is selected to be at the reference viewing distance in a movie theatre.

It is to be noted that the virtual viewing distance may also be selected to be different from the viewing distance in the reference configuration, e.g. a movie theatre, while the 3D image data is still created for, and actually viewed in, the movie theatre. For example, the creator might want to show objects that are on average relatively close to the viewer in the theatre. Hence a light negative lens may be used in the 3D spectacles to achieve that the eye muscles have to focus on a virtual distance that is closer to the viewer. Also, the 3D material may be created for viewing at a standard TV screen at home, or at a computer monitor close to the player of a 3D game. Most objects will now be behind the screen. A light positive lens may be used in the 3D spectacles to achieve that the eye muscles have to focus on an "average" virtual distance that is behind the screen farther away from the viewer.

In particular, the 3D spectacles providing the compensated eye configuration may be combined in a system where the 3D image data is displayed at a screen size differing from the screen size intended to be used for the nominal eye configuration, while applying an additional disparity offset to the L and R image data to modify the depth range as discussed above. A system for applying such offset is further described in detail in a co-pending application of the applicant; applicant reference PH014180, EP application 09171274.5.

Figure 2 shows viewing configurations. In a reference viewing configuration 201 the lens 204 of the viewer's eye is focused on object A. The optical radiation 211 is schematically shown, and shown to be incident on a human retina 212. A second viewing configuration 202 shows displaying the image data of object A on a 3D display screen 209. The 3D display is closer to the viewer then in the reference viewing configuration. The lens 205 of the viewer's eye is now focused on the 3D display screen 209 instead of on object A. Due to disparity information in the 3D image data the user still perceives the object A at the original distance. Hence there now is a discrepancy between the actual muscular tension of the eye lens and the distance perceived. In a compensated viewing configuration 203 an optical element, a lens 207, is provided in front of the human eye. The lens is shown to have of a positive strength in the example. Now the human eye 206 is shown to have the same curvature as the lens 204 in the reference viewing configuration 201.

It is noted that it makes a difference for the eye whether it sees the real object An in real case 201, or a virtual object via 3D glasses, as in display case 202. In real case 201 the focusing (eye lens curvature) of the eye is less strong then in the display case 202. Hence a focal length mismatch occurs with the disparity information in the 3D image data. It is also noted that there is a so-called angular mismatch, which, if it exceeds 20 arc minutes, starts to invoke some eye fatigue. In an embodiment the angular mismatch is compensated by a prism shape of the optical elements, as explained later in detail.

By providing to the 3D glasses a weak positive optical lens, as shown in compensated case 203, we can compensate for the focal length mismatch. The strength depends on the viewing distance from the viewer to the screen and the center of gravity where most objects will appear behind the screen in the home. For example, for an actual viewing distance of 2 meter, and objects appearing some 3 meter behind the screen 209, we will need around + 0.3 diopter correction lens. Now the eye 206, in the compensated case 203, has the same natural curvature as the eye 204 in real case 201 when it is looking at object A.

In an embodiment the diopter strength of the lens is determined for an actual display viewing distance (e.g. to a home TV set) to modify the optical radiation to a virtual viewing distance (e.g. in a reference viewing configuration like a movie theatre). The lens has a diopter correction strength $S_d$ determined by

$$S_d = 1 / D_d - 1 / D_v$$

wherein $D_d$ is the display viewing distance, and $D_v$ is the virtual viewing distance. Due to this correction for all objects the focal length of the eye is equal for the home configuration on screen 209 and the reference configuration in the cinema.

It is noted that in the above mentioned co-pending application a disparity offset is added in a target viewing configuration to accommodate the screen size difference with a reference, source viewing configuration. In the diopter formula for corresponding 3D spectacles $D_d$ must now be replaced by a target viewing distance in the target viewing

configuration, and $D_v$ must be replaced by a source viewing distance in the source viewing configuration.

In an embodiment of the spectacles the optical elements include at least one prism for modifying the nominal eye-convergence to a selected eye-convergence at a virtual viewing distance different from the eye-convergence at the display viewing distance. The convergence of the viewer's eyes is adjusted to be in accordance with depths to be perceived. It is noted that a single prism may be used as the relative rotational position of the eyes provides the oculomotor convergence clue to the human brain. Alternatively each eye of the viewer may be provided with a prism of half the strength.

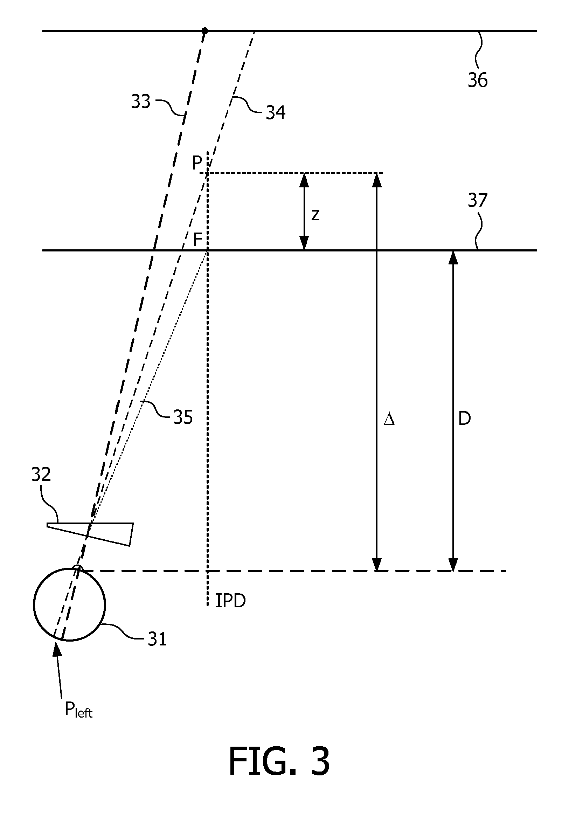

Figure 3 shows a prism for compensating the eye configuration. A human left eye 31 is shown which perceives an object P, providing an image $P_{left}$ on the retina. The right eye is similar (not shown). It is noted that dashed line 33 shows the convergence angle when the eye is focused on a large screen 36 at a large viewing distance. A smaller screen 37 at an actual (closer) viewing distance D is actually used for displaying the 3D image data. Line 35 shows the convergence angle of the eye needed to observe the smaller screen 37 at point F, which actually shows the object P. A virtual object P' is perceived at depth Δ from the viewer (i.e. depth z behind the screen 37), and the convergence angle of object P' is indicated by dashed line 34. The prism 32 achieves that the eye does not have to be fully rotated according to line 35, but is rotated to the convergence angle of the original screen 36 (as indicated by line 33). Hence the actual, compensated eye configuration corresponds to the eye configuration of the reference viewing configuration at the large screen 36. Any difference in viewing distance with respect to the reference distance, or to a preferred selected viewing distance, can be accommodated by selecting an appropriate angle of the prism.

In an embodiment of the spectacles the compensated eye configuration corresponds to a reference eye configuration of a viewer of a reference 3D display intended during generating the 3D image data. The eye configuration is now forced to be as intended in a reference viewing configuration, i.e. a predetermined viewing distance and setup, e.g. a movie theatre used as reference configuration when creating and authoring the 3D image data. The viewer will be at an actual viewing configuration, e.g. at home for a TV screen. When the viewer at the actual viewing configuration wears the spectacles that have been constructed to have a strength corresponding to the difference between the reference and the actual viewing configuration, the eye configuration (convergence and accommodation) are equal to the reference configuration. In the example the viewer at home will experience the same oculomotor cues at the viewer in the movie theatre.

In an embodiment of the spectacles the strength of the optical elements is selected so that the compensated eye configuration corresponds to a comfort eye configuration of a viewer of a virtual 3D display at a virtual viewing distance. The comfort eye configuration allows comfortably perceiving a comfort depth range comprising depth values occurring in the 3D image data. The comfort eye configuration corresponds to an eye configuration in which a selected depth range can be perceived via disparity cues without causing discomfort. Although personal differences and preferences are acknowledged, the average viewer has a depth range around the actual depth corresponding to oculomotor cues that can be comfortably perceived. In the art a value of the maximum angle for comfortable viewing is defined by: $|\eta| < \eta_{max}$ where $\eta_{max} \approx 0°34'$, and the corresponding depth range is called the *Percival Zone of Comfort.* This equals about 1/3 of the area where the left and right image can be fused to a 3D perception by the human brain. Geometry shows that minimum and maximum comfortable distance for virtual objects $\Delta_{min}$ and $\Delta_{max}$ are then given by:

$$\tan^{-1}(2\Delta_{max}/IPD) - \tan^{-1}(2D/IPD) = \eta_{max} \qquad (1a)$$

$$\tan^{-1}(2D/IPD) - \tan^{-1}(2\Delta_{min}/IPD) = \eta_{max} \qquad (1b)$$

For $D, \Delta \gg IPD$ we can approximate this as: $|1/D - 1/\Delta| \leq 2 \eta_{max}/IPD \approx 0.3$ Diopters, where IPD is the inter eye distance.

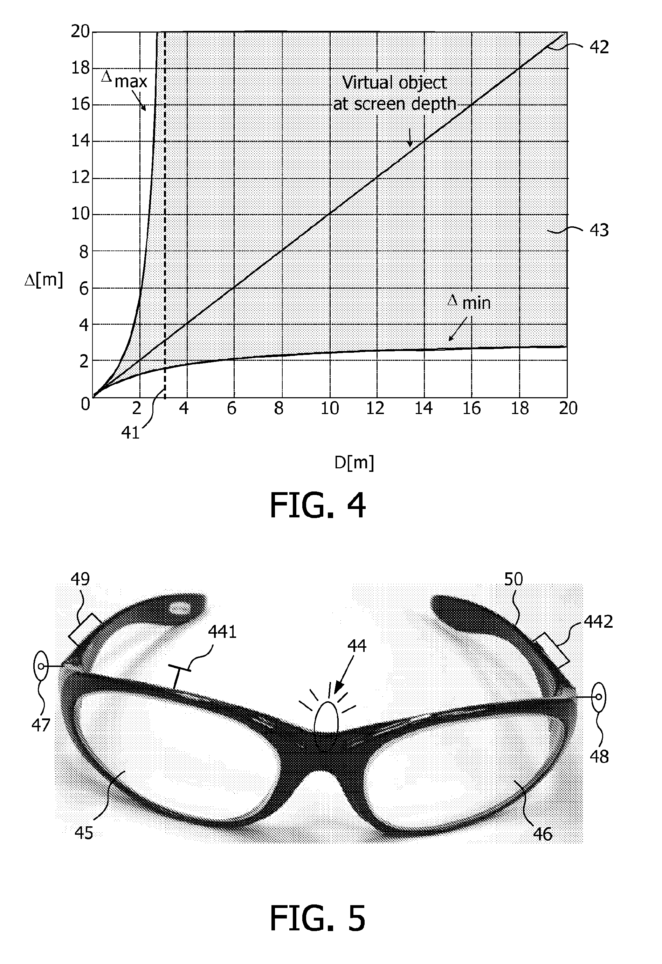

Figure 4 shows a plot of comfort depth range. The Figure shows a plot of the distance from the viewer to a virtual object Δ[m], in particular the minimum and maximum distances $\Delta_{min}$, $\Delta_{max}$ that are comfortably viewable, as a function of the distance of the viewer to the screen D[m]. A line 42 at 45° indicates virtual objects at the screen depth. The plot shows, by a shaded area 43, Percival's zone of comfort (based on $|\eta| < 0°34$) of a virtual distance of an object to the viewer versus the distance to the screen at an inter eye distance IPD (IPD = 0,063 m). It is noted that except for very small D (e.g. on PC monitors, portable displays) the comfort zone behind the screen is much larger than in front of the screen.

In fact, when the viewer is more than ~3m from the screen all objects behind the screen are in the comfort zone, as shown by the dashed line 41. Asymptotically, all virtual objects more than 3m from the viewer (i.e. Δ[m] > 3m) are always in the comfort zone. It is to be noted that by adding the optical elements to the spectacles as proposed above, the screen appears to be moved to a virtual viewing distance. The virtual viewing distance is selected to be appropriate for perceiving objects at a required depth range, which depth range remains within the comfort zone as indicated by the shaded area 43.

Suitably selecting the depth range for the viewing purposes allows selecting strength of the optical elements resulting in comfortably viewing. For example, the range may be 1-3 meter for an erotic movie, which will increase the sense of reality without causing discomfort. In a particular embodiment the virtual viewing distance is selected to be around 3 meter so that the comfort depth range comprises depth values from a minimum depth close to the viewer up to infinity. This has the advantage that any scene can be comfortably viewed, while only very close objects cause discomfort.

Figure 5 shows adjustable 3D spectacles. The spectacles 50 have adjustable glasses 45,46. The glasses are arranged similar to glasses 21,22 of Figure 1 for admitting only the left image L to the left eye and only the right image R to the right eye, e.g. shutter glasses. In addition, the strength of the glasses, e.g. the diopter strength of the lens or the angle of the prism, can be adjusted.

In an embodiment of the spectacles the optical elements are adjustable by user control elements 47,48 provided on the spectacles. The optical elements of the spectacles are made adjustable, e.g. by fluid filled elements or matched sliding concave and convex lenses. Hence the actual strength of the lens and/or prism can be adjusted as deemed suitable. The adjustment can be done, for example, by user control element provided on the spectacles such as a knob or turning wheel 47 for the strength of the lens and a similar element 48 for the strength of the prism.

Also, the adjustment may be controlled via an adjustment control signal, e.g. generated in the spectacles or received from a 3D display system. The adjustment signal may control a servo motor or fluid pump to change the strength of the optical elements. The adjustment signal is generated for the required strengths as determined based on the viewing configuration as described above, like the actual viewing distance, reference viewing distance, user preferences or parameters, and/or adjustment data for the 3D spectacles provided with the 3D image data, e.g. stored on the Blu-Ray Disc.

The adjustment of the optical elements may be made in dependence of a measurement signal indicative of a viewer eye parameter, for example the actual shape of the lens or the eye distance. The user's eye may be measured regularly, e.g. via infrared light reflected from the surface of the eye. Furthermore, the adjustment may be made in dependence of a measurement signal indicative of the viewing distance to the 3D display. Distance measurement is available in various ways, e.g. based on a low power laser beam. The measurement may be performed off-line, e.g. by a 3D image processing device communicating with the spectacles. The above ways of adjusting may be combined, e.g. manual fine-tuning an automatically set strength.

In an embodiment of the 3D spectacles includes a measurement unit 442 for measuring the viewing distance of the viewer to the 3D display. Actually measuring the viewing distance of the viewer to the 3D display can be correctly performed because the spectacles are, when in operation, very close to the eyes of the viewer. Furthermore, the spectacles may include a measurement unit 441 for measuring an eye distance of the viewer. The eye distance of the viewer can be measured of the viewer who is actually wearing the spectacles. The user may, for example, manually adjust a lever 441 until reference markers are perceived correctly by both eyes. The lever may generate a measurement signal indicative of the eye distance as set by the viewer.

In an embodiment the spectacles are provided with a transfer unit 49 for transferring a signal to the 3D image processing device for adjusting the left image L and the right image R. The transfer unit may include a bidirectional transceiver, e.g. coupled to a 3D image processing device via a wireless local area network. Alternatively, the spectacles may have an infrared transmitter/receiver for communicating with the 3D processing image device.

In an embodiment the spectacles are provided with an indicator 44, e.g. an LED, for indicating an optimum viewing distance. The indicator may show a warning color, e.g. green for optimum distance, orange for too close and blue for too far. The optimum viewing distance is a reference viewing distance corrected by a size ratio between the size of the 3D display and the size of a reference 3D display intended displaying the 3D image data for a viewer at the reference viewing distance. The spectacles may also have a numeric indicator for showing, to the viewer, the optimum viewing distance.

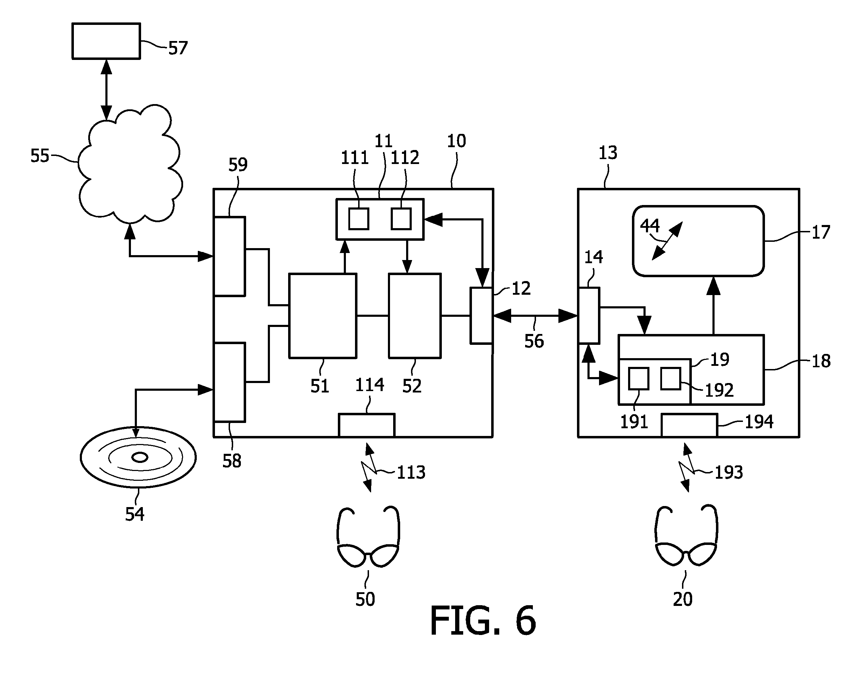

Figure 6 shows a system for processing 3D image data, such as video, graphics or other visual information. A 3D image device 10 is coupled to a 3D display device 13 for transferring a 3D display signal 56.

The 3D image device has an input unit 51 for receiving image information. For example the input unit may include an optical disc unit 58 for retrieving various types of image information from an optical record carrier 54 like a DVD or Blu-Ray disc. In an embodiment the input unit may include a network interface unit 59 for coupling to a network 55, for example the internet or a broadcast network, such device usually being called a set-top box. Image data may be retrieved from a remote media server 57. The 3D image device may also be a satellite receiver, or a media server directly providing the display signals, i.e. any suitable device that outputs a 3D display signal to be directly coupled to a display unit.

The 3D image device has an image processor 52 coupled to the input unit 51 for processing the image information for generating a 3D display signal 56 to be transferred via an image interface unit 12 to the 3D display. The processor 52 is arranged for generating the image data included in the 3D display signal 56 for display on the display device 13. The image device cooperates with 3D spectacles 50 as described above, e.g. shutter glasses, for providing at least a left image L to be perceived by a left eye and a right image R to be perceived by a right eye of a viewer.

The 3D image device has an adjustment unit 11 for adjusting optical elements of the spectacles via an adjustment signal 113 for changing optical radiation from the 3D display. The strength of the optical elements is adjusted as described above for modifying the nominal eye configuration to a compensated eye configuration in accordance with depth to be perceived in the 3D image data. Hence the radiation of the 3D display is modified via the 3D spectacles under the control of the 3D processing device. The spectacles are adjusted based on information on the 3D viewing configuration and/or the 3D image data.

In an embodiment the device has a display metadata unit 112 for providing metadata of the 3D display. The display metadata unit 112 determines 3D display metadata including the size the 3D display. The size may include the actual screen width or the width at which the 3D image data are shown in a window.

In an embodiment device may include a viewer metadata unit 111 for providing viewer metadata defining spatial viewing parameters of the viewer with respect to the 3D display. The viewer metadata unit 111 may be arranged for determining an actual viewing distance of the viewer to the 3D display, e.g. by measuring the distance. Also, the unit 111 may provide a setup menu for the viewer for determining a viewer selection for one or more viewer settings. The setting may include an eye distance of the viewer, a preferred viewing distance of the viewer to the 3D display, or a preferred comfort depth range. The adjustment unit 11 may apply the settings to generate an appropriate adjustment signal for modifying the optical elements of the spectacles.

Furthermore, the processor 52 may be arranged for determining an actual depth range occurring in the 3D image data, e.g. as provided by depth parameters or a depth map. The actual depth range can advantageously be used for adjusting the 3D spectacles. Also, the processor 52 may be arranged for determining an average virtual distance of objects in the 3D image data, e.g. as provided by a specific average depth parameter with the 3D image signal, or as derived from a depth map. Such 3D image signal with additional depth data may be provided on a record carrier like an enhanced BD. From the actual depth range or average virtual distance it follows which focal length and/or convergence correspond to an eye configuration for the required the depth range or average virtual viewing distance. By taking the actual screen distance into account the required strength of the lens and/or prism can be calculated, e.g. based on the above formula for diopter correction strength $S_d$.

In an embodiment the processor 52 is arranged for determining a preferred viewing distance for the 3D image data. For example, the preferred viewing distance may be indicated by a parameter in the 3D image data, or may established based on screen size and a reference viewing distance and screen size. From the actual viewing distance it follows which focal length and/or convergence are needed for modifying the actual viewing distance into the preferred viewing distance. By taking the actual viewing distance into account the required strength of the lens and/or prism can be calculated. Furthermore, the preferred viewing distance may be shown to the viewer, e.g. on the display as a distance in meters.

In an embodiment, the device may have transfer means 114 for receiving a control signal from the spectacles for adjusting the left image L and the right image R. This has the advantage that measurement and/or setting data from the spectacles is received and may be used to adjust the left and right images and/or the adjustment signal. It is noted that a 3D image processing device may apply the received signal were appropriate. For example, when the received signal is indicative of the eye distance and/or viewing distance, the 3D image processing device may calculate a disparity offset to be applied. A device and system for calculating and applying such offset has been mentioned above.

The 3D display device 13 is for displaying 3D image data. The device has a display interface unit 14 for receiving the 3D display signal 56 including the 3D image data transferred from the 3D image device 10. The display device may be provided with a transceiver 194 for communicating with spectacles 20 via a control signal 193. The control signal 193 may have the function of synchronizing shutter glasses as described above for spectacles 20. The control signal 193 may also be an adjustment signal similar to the adjustment signal 113 described above for adjustable spectacles 50.

The transferred image data is processed in image processing unit 18 for generating display control signals for rendering the 3D image data on the 3D display based on the 3D image data. The device has a 3D display 17 receiving the display control signals for displaying the processed image data, for example a dual LCD, and has a display depth range indicated by arrow 44.

In an embodiment the 3D image device has an adjustment unit 19 for providing the adjustment signal 193. The adjustment unit may have a display metadata unit 192 for providing 3D display metadata defining the size of the 3D display. It may further include a viewer metadata unit 191 for providing viewer metadata defining spatial viewing parameters of the viewer similar to unit 111 described above.

It is noted that in various arrangements of the system providing said adjustment signal for setting the 3D spectacles and processing the 3D image data is provided in either the image device or the 3D display device. Also, both devices may be combined to a single multi function device.

The 3D display signal may be transferred over a suitable high speed digital video interface such as the well known HDMI interface (e.g. see "High Definition Multimedia Interface Specification Version 1.3a of Nov 10 2006), extended to define the adjustment data for setting the spectacles as defined above.

Figure 6 further shows the record carrier 54 as a carrier of the 3D image data. The record carrier is disc-shaped and has a track and a central hole. The track, constituted by a series of physically detectable marks, is arranged in accordance with a spiral or concentric pattern of turns constituting substantially parallel tracks on an information layer. The record carrier may be optically readable, called an optical disc, e.g. a CD, DVD or BD (Blu-ray Disc). The information is represented on the information layer by the optically detectable marks along the track, e.g. pits and lands. The track structure also comprises position information, e.g. headers and addresses, for indication the location of units of information, usually called information blocks. The record carrier 54 has physical marks embodying a 3D image signal representing the digitally encoded 3D image data for display on a 3D display for a viewer. The record carrier may be manufactured by a method of first providing a master disc and subsequently multiplying products by pressing and/or molding for providing the pattern of physical marks. The 3D image signal may include one or more parameters indicative for the strength of the optical elements in the 3D spectacles. The parameters may be provided valid for a whole disc, program or title, or may change dynamically for adjusting the 3D spectacles to the respective scene or part of the 3D image data.

It is to be noted that the invention may be implemented in hardware and/or software, using programmable components. A method for implementing the invention has the step of adjusting the optical elements of the spectacles for changing optical radiation from the 3D display for modifying the nominal eye configuration to a compensated eye configuration in accordance with depth to be perceived in the 3D image data. The function is similar to the device as described above.

Although the invention has been mainly explained by embodiments using a home setting for wearing the 3D spectacles, other environments may benefit also from the invention. For example in a movie theatre the 3D spectacles may be used, e.g. to bring the screen virtually closer to the viewer to allow objects at close range. Also different spectacles may be used in front rows and/or back rows of a large 3D movie theatre. Also the 3D spectacles may be used in a 3D product design system, a movie authoring system, 3D broadcast studio, etc. Furthermore in the examples, 3D image data and adjustment data for the 3D spectacles may be stored on the Blu-Ray Disc, but the invention is also suitable for any 3D signal, transfer or storage format, e.g. formatted for distribution via the internet. Furthermore, the adjustment data for the 3D spectacles may be either included in the 3D image signal, or may be provided separately.

It will be appreciated that the above description for clarity has described embodiments of the invention with reference to different functional units and processors. However, the invention is not limited to the embodiments, and lies in each and every novel feature or combination of features described. Any suitable distribution of functionality between different functional units or processors may be used. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way. The word 'comprising' does not exclude the presence of other elements or steps than those listed.

## Claims

1. Spectacles for viewing three dimensional [3D] image data rendered via a 3D image processing device on a 3D display, the 3D display providing at least a left image L to be perceived by a left eye and a right image R to be perceived by a right eye of a viewer at a display viewing distance, the spectacles being arranged to admit only the left image L to the left eye and only the right image R to the right eye, and a nominal eye configuration of the viewer having the eyes accommodated at the display viewing distance by a nominal eye-convergence and a nominal eye lens focal length to perceive said images,

the spectacles comprising optical elements (21,22) for changing optical radiation from the 3D display for modifying the nominal eye configuration to a compensated eye configuration in accordance with depth to be perceived in the 3D image data.

2. Spectacles as claimed in claim 1, wherein the optical elements (21,22) comprise a lens (207) for modifying the nominal eye lens focal length to a selected eye lens focal length at a virtual viewing distance different from the display viewing distance.

3. Spectacles as claimed in claim 2, wherein the lens (207) has a diopter strength $S_d$ determined by

$$S_d = 1 / D_d - 1 / D_v$$

wherein $D_d$ is the display viewing distance, and $D_v$ is the virtual viewing distance.

4. Spectacles as claimed in claim 1, wherein the optical elements (21,22) comprise at least one prism (32) for modifying the nominal eye-convergence to a selected eye-convergence at a virtual viewing distance different from the eye-convergence at the display viewing distance.

5. Spectacles as claimed in claim 1, wherein the optical elements are arranged so that the compensated eye configuration corresponds to a reference eye configuration of a viewer of a reference 3D display intended during generating the 3D image data.

6. Spectacles as claimed in claim 1, wherein the optical elements are arranged so that the compensated eye configuration corresponds to a comfort eye configuration of a viewer of a virtual 3D display at a virtual viewing distance, the comfort eye configuration allowing comfortably perceiving a comfort depth range comprising depth values occurring in the 3D image data.

7. Spectacles as claimed in claim 6, wherein the virtual viewing distance is around 3 meter so that the comfort depth range comprises depth values from a minimum depth close to the viewer up to infinity.

8. Spectacles as claimed in claim 1, wherein the optical elements are adjustable by at least one of

- a user control element (47,48) provided on the spectacles;
- an adjustment control signal (113);
- a measurement signal indicative of a viewer eye parameter;
- a measurement signal indicative of the viewing distance to the 3D display.

9. Spectacles as claimed in claim 1 or 8, wherein the spectacles comprise at least one of:

- measurement means (442) for measuring the viewing distance of the viewer to the 3D display;
- measurement means (441) for measuring an eye distance of the viewer;
- transfer means (49) for transferring a signal to the 3D processing device for adjusting the left image L and the right image R; or
- indicator means (44) for indicating an optimum viewing distance, the optimum viewing distance being a reference distance corrected by a size ratio between the size of the 3D display and the size of a reference 3D display intended displaying the 3D image data for a viewer at the reference distance.

10. Device for processing of three dimensional [3D] image data for rendering on a 3D display for a viewer via spectacles, the 3D display providing at least a left image L to be perceived by a left eye and a right image R to be perceived by a right eye of a viewer at a display viewing distance, a nominal eye configuration of the viewer having the eyes accommodated at the display viewing distance by a nominal eye-convergence and a nominal eye lens focal length to perceive said images,
the device comprising

- means (11) for adjusting optical elements (45,46) of the spectacles (50) via an adjustment signal (113) for changing optical radiation from the 3D display for modifying the nominal eye configuration to a compensated eye configuration in accordance with depth to be perceived in the 3D image data.

11. Device as claimed in claim 10, wherein the device comprises, for generating the adjustment signal (113), at least one of

- means (112) for determining a size of the 3D display;
- means (111) for determining an actual viewing distance of the viewer to the 3D display;
- means (111) for determining a viewer selection for at least one of

  - an eye distance of the viewer,
  - a preferred viewing distance of the viewer to the 3D display,
  - a preferred comfort depth range;

- means (52) for determining an actual depth range occurring in the 3D image data;
- means (52) for determining an average virtual distance of objects in the 3D image data;
- means (52) for determining a preferred viewing distance for the 3D image data;
- transfer means (114) for receiving a control signal from the spectacles.

12. Device as claimed in claim 10, wherein the device comprises input means (51) for retrieving the source 3D image data from a record carrier.

13. Device as claimed in claim 10, wherein the device is a 3D display device and comprises the 3D display (17) for displaying 3D image data.

14. Method of processing of three dimensional [3D] image data for rendering on a 3D display for a viewer via spectacles, the 3D display providing at least a left image L to be perceived by a left eye and a right image R to be perceived by a right eye of a viewer at a display viewing distance via spectacles, a nominal eye configuration of the viewer having the eyes accommodated at the display viewing distance by a nominal eye-convergence and a nominal eye lens focal length to perceive said images,
the method comprising

   - adjusting optical elements (45,46) of the spectacles (50) for changing optical radiation from the 3D display for modifying the nominal eye configuration to a compensated eye configuration in accordance with depth to be perceived in the 3D image data.

15. Computer program product for processing of three dimensional [3D] image data for display on a 3D display for a viewer, which program is operative to cause a processor to perform the method as claimed in claim 14.

16. Use of 3D spectacles for viewing three dimensional [3D] image data rendered via a 3D image processing device on a 3D display, the 3D display providing at least a left image L to be perceived by a left eye and a right image R to be perceived by a right eye of a viewer at a display viewing distance, the spectacles being arranged to admit only the left image L to the left eye and only the right image R to the right eye, and a nominal eye configuration of the viewer having the eyes accommodated at the display viewing distance by a nominal eye-convergence and a nominal eye lens focal length to perceive said images, the use comprising, via optical elements (21,22) of the 3D spectacles, changing optical radiation from the 3D display for modifying the nominal eye configuration to a compensated eye configuration in accordance with depth to be perceived in the 3D image data.

## FIG. 1

## FIG. 2

# FIG. 3

FIG. 4

FIG. 5

FIG. 6

Europäisches
Patentamt
European
Patent Office
Office européen
des brevets

**EUROPEAN SEARCH REPORT**

Application Number

EP 09 17 1926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/160389 A1 (SUYAMA SHIRO [JP] ET AL) 19 August 2004 (2004-08-19) | 1-3,5-16 | INV. G02B27/22 G02C7/10 H04N13/00 |
| Y | * paragraphs [0419] - [0433]; figures 60,61 * | 4 | |
| Y | US 5 757 546 A (LIPTON LENNY [US] ET AL) 26 May 1998 (1998-05-26) * column 4, lines 42-52 * | 4 | |
| X | EP 0 595 705 A1 (SONY CORP [JP]) 4 May 1994 (1994-05-04) * column 3, lines 10-54 * | 1,8 | |
| X | US 4 853 764 A (SUTTER HANS E [PE]) 1 August 1989 (1989-08-01) * column 6, lines 3-63 * | 1,8 | |
| A | US 2006/232665 A1 (SCHOWENGERDT BRIAN T [US] ET AL) 19 October 2006 (2006-10-19) * paragraphs [0045] - [0052] * | 1-16 | |
| A | US 2008/117289 A1 (SCHOWENGERDT BRIAN T [US] ET AL) 22 May 2008 (2008-05-22) * paragraphs [0068] - [0129] * | 1-16 | TECHNICAL FIELDS SEARCHED (IPC) G02B G02C H04N |

The present search report has been drawn up for all claims

| Place of search | Date of completion of the search | Examiner |
|---|---|---|
| Munich | 9 February 2010 | Stemmer, Michael |

**ANNEX TO THE EUROPEAN SEARCH REPORT
ON EUROPEAN PATENT APPLICATION NO.**

EP 09 17 1926

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2010

| Patent document cited in search report | | Publication date | Patent family member(s) | | Publication date |
|---|---|---|---|---|---|
| US 2004160389 | A1 | 19-08-2004 | US | 2004164927 A1 | 26-08-2004 |
| US 5757546 | A | 26-05-1998 | NONE | | |
| EP 0595705 | A1 | 04-05-1994 | BR | 9304385 A | 03-05-1994 |
| | | | CA | 2108582 A1 | 29-04-1994 |
| | | | DE | 69318102 D1 | 28-05-1998 |
| | | | DE | 69318102 T2 | 13-08-1998 |
| | | | JP | 3309443 B2 | 29-07-2002 |
| | | | JP | 6141264 A | 20-05-1994 |
| US 4853764 | A | 01-08-1989 | NONE | | |
| US 2006232665 | A1 | 19-10-2006 | NONE | | |
| US 2008117289 | A1 | 22-05-2008 | EP | 1784988 A1 | 16-05-2007 |
| | | | JP | 2008509438 T | 27-03-2008 |
| | | | KR | 20070064319 A | 20-06-2007 |
| | | | WO | 2006017771 A1 | 16-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PH 014180

- EP 09171274 A

**Non-patent literature cited in the description**

- **R. Kutka.** Reconstruction of Correct 3-D perception on Screens viewed at different distances. *IEEE transactions on Communications,* January 1994, vol. 42 (1

- *High Definition Multimedia Interface Specification,* 10 November 2006